**Europäisches Patentamt**

**European Patent Office**

**Office européen des brevets**

(11) Veröffentlichungsnummer: **0 099 461**
**B1**

(12) **EUROPÄISCHE PATENTSCHRIFT**

(45) Veröffentlichungstag der Patentschrift:
**08.10.86**

(21) Anmeldenummer: **83105460.6**

(22) Anmeldetag: **01.06.83**

(51) Int. Cl.⁴: **H 02 H 3/30**, H 02 H 3/38,
H 02 H 7/26

(54) Selektive Erdschlussschutzschaltung für eine Hochspannungskabelstrecke.

(30) Priorität: **03.06.82 AT 2144/82**

(43) Veröffentlichungstag der Anmeldung:
**01.02.84 Patentblatt 84/5**

(45) Bekanntmachung des Hinweises auf die Patenterteilung:
**08.10.86 Patentblatt 86/41**

(84) Benannte Vertragsstaaten:
**BE CH DE GB LI SE**

(56) Entgegenhaltungen:
**DE - A - 1 588 915**
**DE - A - 2 906 110**
**DE - B - 2 648 357**
**GB - A - 2 000 399**
**US - A - 2 214 858**

**BROWN BOVERI MITTEILUNGEN, Heft 2/3, 1972, H. UNGRAD et al., "Distanzrelais Typ LI41a und seine Anwendungsmöglichkeiten", Seiten 88-92**
**AEG.- Hilfsbuch 1960, Seiten 6/27 und 6/28**

(73) Patentinhaber: **AEG Austria Gesellschaft m.b.H, Brünner Strasse 52, A-1211 Wien (AT)**

(72) Erfinder: **Zimmerl, Ludwig, Ing., Hickelgasse 26, A-1140 Wien (AT)**

(74) Vertreter: **Krick, Hermann et al, Patentanwälte Dipl.-Ing. H. Mitscherlich Dipl.-Ing. K. Gunschmann Dr. rer. nat. W. Körber Dipl.-Ing. J. Schmidt-Evers Dipl.-Ing. W. Melzer Steinsdorfstrasse 10, D-8000 München 22 (DE)**

## Beschreibung

Die Erfindung bezieht sich auf eine selektive Erdschlussschutzschaltung für eine Hochspannungskabelstrecke, an deren Enden je ein Leistungsschalter mit Auslöseeinrichtung sowie den Nullstrom und die Nullspannung erfassende Wandler vorgesehen sind.

Derartige Schaltungen sind allgemein bekannt und werden meist im Zusammenhang mit Erdschlussrelais beschrieben.

So ist beispielsweise im AEG-Hilfsbuch 1960, Seiten 6/27 und 6/28, ein Erdschlussrelais beschrieben, das mit der 50 Hz Grundwelle arbeitet und an Nullstrom bzw. Nullspannung erfassende Wandler angeschlossen ist.

Die DE-A-1 588 915 beschreibt ein elektronisches Erdschlussrelais, bei dem die Fehlergrössen Summennullstrom und Verlagerungsspannung diese Fehlergrössen erfassenden Eingangsgliedern zugeführt sind. Ziel der bekannten Schaltungsanordnung ist es jedoch, die Speicherung von Störgrössen in einem elektronischen Erdschlussrelais unwirksam zu machen.

Bei der aus der US-A-2 214 858 bekannt gewordenen Schaltung sind über eine Pilotleitung mit Ruhestrombetrieb zwei voneinander entfernte Schaltstationen miteinander verbunden. Solange Ruhestrom fliesst, werden die Leistungsschalter in den Schaltstationen im eingeschalteten Zustand gehalten. Eine Unterbrechung des Ruhestromes in der Pilotleitung, verursacht durch Überstrom oder Unterspannung feststellende Relais, die aus Strom- bzw. Spannungswandlern gespeist werden, bewirkt eine Abschaltung der Leistungsschalter.

Diese bekannten Schaltungsanordnungen eignen sich nicht für Hochspannungsnetze mit Erdschlusskompensation. Von ihnen wird ein Erdschluss von den eingebauten Netzschutzeinrichtungen, beispielsweise Überstromzeitschutz, Distanzschutz usw., nicht erfasst und daher nicht abgeschaltet. Die erdschlussbehaftete Leitungsbzw. Kabelstrecke muss zuerst geortet werden. Nachdem die Erdschlussstelle lokalisiert ist, kann die Abschaltung vorgenommen werden.

Die Ortung der erdschlussbehafteten Leitungsbzw. Kabelstrecke kann, insbesondere in weit ausgedehnten Hochspannungsnetzen, recht zeitaufwendig sein. Im allgemeinen dauert die Lokalisierung der Erdschlussstelle einige Stunden. Die thermische Auswirkung eines Erdschluss-Lichtbogens kann beispielsweise bei in Brücken verlegten Kabelstrecken grosse Schäden verursachen. Hier muss ein Erdschluss spätestens nach 30 s abgeschaltet werden.

Der Erfindung liegt daher die Aufgabe zugrunde, eine selektive Erdschlussschutzschaltung zu schaffen, mit der ein Erdschluss auf der Hochspannungskabelstrecke schnell erfasst und abgeschaltet wird.

Diese Aufgabe wird erfindungsgemäss dadurch gelöst, dass jedem Leistungsschalter eine Signalverarbeitungseinrichtung in Form einer logischen Verknüpfungsschaltung zugeordnet ist, von der zwei Eingänge an die Ausgänge eines aus den Wandlern gespeisten Erdschlussrichtungsrelais angeschlossen sind, und ein dritter Eingang über eine die Messgrösse des Spannungswandlers erfassende Einrichtung mit dem die Nullspannung erfassenden Wandler verbunden ist, und zwei Anschlüsse für einen beiden Signalverarbeitungseinrichtungen gemeinsam zugeordneten Informationskanal vorgesehen sind.

Der Vorteil dieser Anordnung ist der, dass die erdschlussbehaftete Leitung sofort nach Eintritt des Fehlers automatisch selektiv gemeldet und abgeschaltet wird, im Gegensatz zu bekannten Anordnungen, bei denen sie aus einer Anzahl von Meldungen vom Personal im Lastverteiler eruiert werden mussten.

Gemäss einem weiteren Merkmal der Erfindung ist vorgesehen, dass die die Messgrösse des Spannungswandlers erfassende Einrichtung ein Schwellenwertschalter, insbesondere ein Schmitt-Trigger, ist. Damit wird in vorteilhafter Weise erreicht, dass die Messung der Richtung der Oberwellenströme erst bei Überschreitung des Schwellenwertes der Verlagerungsspannung erfolgt. Dadurch wird ein fehlerhaftes Ansprechen der Schutzeinrichtung durch Schwebungen im Normalbetrieb des Netzes vermieden.

Eine weitere vorteilhafte Weiterbildung ist dadurch gekennzeichnet, dass das Erdschlussrichtungsrelais ein auf die bei Erdschluss in den Leitungen auftretenden Oberwellen ansprechendes Relais ist. Die Folge davon ist, dass die Oberwellenströme weder in ihrer Grösse noch in ihrer Richtung durch die 50 Hz-Nullströme bzw. durch die Löschspulen beeinflusst werden.

Zur Abgabe einer logisch selektiven Meldung und zur Richtungskontrolle der Oberwellenströme weist die Erfindung das Merkmal auf, dass die als logische Verknüpfungsschaltung ausgebildete Signalverarbeitungseinrichtung zwei UND-Glieder enthält, denen je ein Relais zugeordnet ist, von denen eines zur Überwachung des Ausgangssignals und eines zur Überwachung des Informationskanals vorgesehen ist.

Ein weiteres vorteilhaftes Merkmal der Erfindung besteht schliesslich darin, dass der Informationskanal ein die beiden Signalverarbeitungseinrichtungen verbindender Hilfsadernschaltkreis ist, der in jeder Signalverarbeitungseinrichtung über einen Kontakt des den Informationskanal überwachenden Relais geführt ist. Daraus ergibt sich der Vorteil, dass sowohl für die Signalübertragung als auch für die Signalkanalüberwachung nur ein einziges Kabel erforderlich ist.

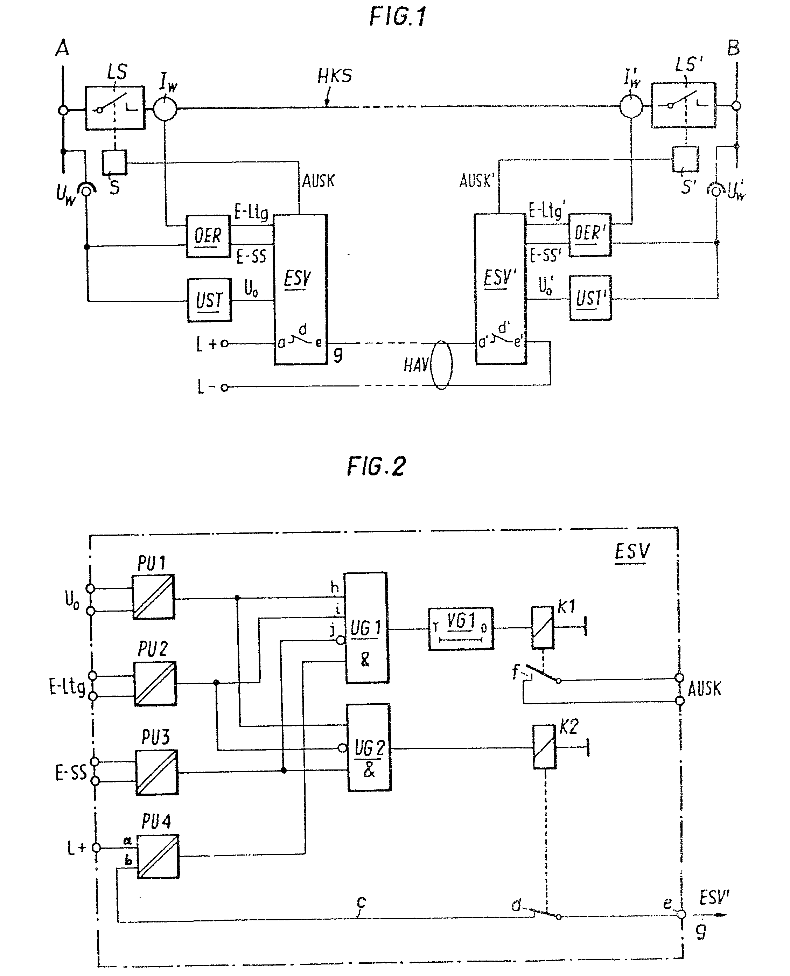

Die Erfindung wird nachstehend an Hand eines in der Zeichnung schematisch dargestellten Ausführungsbeispieles näher erläutert. Es zeigt Fig. 1 eine prinzipielle Ausbildung der Erdschlussschutzschaltung und Fig. 2 eine genauere Ausbildung einer bei der Schutzschaltung verwendeten Signalverarbeitungseinrichtung. In Fig. 1 sind zwei Netzstationen A, B angedeutet, zwischen denen sich die gegen Erschluss zu schützende Dreiphasen-Hochspannungskabelstrecke HKS befindet; an jedem Ende der Kabelstrecke ist ein Leistungsschalter LS, LS' mit Auslösespulen S, S' angeordnet, mit dem die Kabelstrecke abgeschaltet werden kann.

Zur Erfassung der Erdschlussrichtung werden die Netzgrössen – Strom und Spannung – im sogenannten Nullsystem benötigt. Entsprechend der Theorie der symmetrischen Komponenten ist das Nullsystem für die Erdschlussermittlung massgebend. Die nullstromproportionale Messgrösse wird aus Stromwandlern $I_w$, $I_w'$ (beispielsweise Kabelumbau-Stromwandler) in sogenannter Summenstromschaltung und die nullspannungsproportionale Messgrösse aus der in offenem Bereich geschalteten Hilfswicklung von Spannungswandlern $U_w$, $U_w'$ entnommen.

Jedem Ende der Dreiphasen-Hochspannungskabelstrecke HKS ist ein Schwellenwertschalter UST, UST' beispielsweise in Form eines Schmitt-Triggers, ein die Erdschlussrichtung aus den Oberschwingungen des Netzes ermittelndes Erdschlussrichtungsrelais OER, OER' und eine diesen nachgeordnete Signalverarbeitungseinrichtung ESV, ESV' zugeordnet; beide Signalverarbeitungseinrichtungen ESV, ESV' sind in Form einer logischen Verknüpfungsschaltung ausgeführt und über einen Hilfsadern-Schaltkreis HAV verbunden, der von ihnen beeinflusst wird.

Mit den Schwellenwertschaltern UST, UST' wird der Wert der nullproportionalen Messgrösse überwacht, die bei einem Erdschluss im Hochspannungsnetz auftritt. Wenn der Schwellenwerrt (beispielsweise 25 V) erreicht ist, wird ein Signal $U_o$, $U_o'$ erzeugt, das der Signalverarbeitungseinrichtung ESV, ESV' zur Weiterverarbeitung zugeführt wird.

Die Erdschlussrichtungsrelais OER, OER' dienen zur Richtungserfassung der Erdschlussstelle. Hierzu werden zunächst aus der nullstrom- und nullspannungsproportionalen Messgrösse die Oberschwingungsanteile herausgefiltert, die entweder die netzharmonischen oder die mittels Rundsteueranlage fremdeingespeisten Oberschwingungen sind. Anschliessend wird die Blindleistung ermittelt, die als Kriterium für die Richtung der Erdschlussstelle genommen wird. Die Erdschlussstelle befindet sich in Richtung Leitung bzw. in Richtung Sammelschiene, wenn die Blindleistung induktiv bzw. kapazitiv ist. Die Verwendung der Netzoberschwingung ist vorteilhaft, weil die Erdschlusskompensation nur auf die Kompensation der nullstromproportionalen Messgrösse mit der Netzgrundschwingung abgestimmt ist. Die Oberschwingungs-Erdschlussrichtungsrelais geben ein Ausgangssignal E-Ltg, E-Ltg' oder E-SS, E-SS' ab, wenn der Erdschluss in Richtung Leitung oder in Richtung Sammelschiene festgestellt wird. Das Ausgangssignal wird der Signalverarbeitungseinrichtung ESV, ESV' zugeführt.

Die Signalverarbeitungseinrichtungen ESV, ESV' in Form logischer Verknüpfungsschaltungen mit dem Hilfsadern-Schaltkreis HAV haben die Aufgabe, nur Erdschlüsse auf der zu schützenden Kabelstrecke zu erfassen und mit dem Auskommando AUSK, AUSK' abzuschalten und/oder eine selektive Meldung zur Einleitung von Umschaltvorgängen abzugeben. Der Hilfsadern-Schaltkreis HAV ist nur an einem Ende, beispielsweise in der Netzstation A, an eine Hilfsgleichspannung (Pluspol L+ und Minuspol L−) angeschlossen. Am anderen Ende, in der Netzstation B, sind die beiden Hilfsadern miteinander verbunden, so dass eine geschlossene Stromschleife gebildet ist.

Wie aus Fig. 2 ersichtlich, umfasst jede Signalverarbeitungseinrichtung ESV, ESV' vier Pegelumsetzer PU1 bis PU4, beispielsweise in Form von Optokopplern, ein UND-Glied UG1 mit nachgeordnetem Verzögerungsglied VG1 und Relais K1 mit Arbeitskontakt f, ein weiteres UND-Glied UG2, das ein weiteres Relais K2 mit Ruhekontakt d ansteuert.

Dem Pegelumsetzer PU1 wird das Signal $U_o$, $U_o'$ des Schwellenwertschalters UST, UST' zugeführt; dem Pegelumsetzer PU2 das Ausgangssignal E-Ltg, E-Ltg' des Erdschlussrichtungsrelais OER, OER'; dem Pegelumsetzer PU3 das Ausgangssignal E-SS, E-SS' des Erdschlussrichtungsrelais OER, OER' und dem einen Anschluss a des Pegelumsetzers PU4 der einen Signalverarbeitungseinrichtung, beispielsweise ESV, der Pluspol L+ einer nicht weiter dargestellten Spannungsquelle, während der andere Anschluss b an eine Leitung c geführt ist, in der der Ruhekontakt d des Relais K2 liegt. Der Anschluss e der Signalverarbeitungseinrichtung ESV ist über eine der Hilfsadern g (Fig. 1) mit dem Anschluss a' des nicht weiter dargestellten Pegelumsetzers PU4' der anderen Signalverarbeitungseinrichtung ESV' verbunden, deren Anschluss e' mit dem Minuspol L− der Spannungsquelle verbunden ist.

Wie aus Fig. 2 ersichtlich, wird das UND-Glied UG1 von den Pegelumsetzern PU1 bis PU4 angesteuert; der mit dem Pegelumsetzer PU3 verbundene Eingang des UND-Gliedes UG1 ist negiert. Am Ausgang des UND-Gliedes UG1 tritt ein Signal entsprechend «L» auf, wenn vom Schwellenwertschalter UST ein Signal $U_o$ entsprechend «L» und vom Erdschlussrichtungsrelais OER ein Signal E-Ltg entsprechend «L» und vom Hilfsadern-Schaltkreis HAV ein Signal entsprechend «L»(L+) (Kontakte d geschlossen) sowie vom Erdschlussrichtungsrelais OER ein Signal entsprechend «O» ausgegeben wird. In diesem Fall wird das Verzögerungsglied VG1 mit einstellbarer Einschaltverzögerung gestartet und nach Ablauf der Verzögerungszeit das Relais K1 angesteuert, mit dessen Arbeitskontakt f das Aus-Kommando AUSK für den jeweiligen Leistungsschalter (Fig. 1) gebildet wird. Durch die Berücksichtigung des Signals entsprechend «L» des Hilfsadern-Schaltkreises HAV (geschlossen) ist sichergestellt, dass eine Ausschaltung erst vorgenommen wird, wenn keines der beiden Erdschlussrichtungsrelais OER, OER' eine Erdschlussstelle in Richtung Sammelschiene feststellt.

Wie weiter aus Fig. 2 ersichtlich, wird das UND-Glied UG2 von den Pegelumsetzern PU1 bis PU3 angesteuert; der mit dem Pegelumsetzer PU2 verbundene Eingang des UND-Gliedes UG2 ist negiert. Am Ausgang des UND-Gliedes UG2 tritt ein Signal entsprechend «L» auf, wenn vom Schwellenwertschalter UST ein Signal $U_o$ entsprechend «L» und vom Erdschlussrichtungsrelais OER ein Ausgangssignal E-SS entsprechend «L» und ein Ausgangssignal E-Ltg entsprechend «O» ausgegeben wird. In diesem Fall wird das Relais K2 angesteuert und der zugeordnete Ruhekontakt d geöffnet und der Hilfsadern-Schaltkreis HAV unterbrochen. Damit wird eine absichtliche Unterbrechung des Hilfsadern-Schaltkreises HAV vorgenommen, wenn bei einem Erdschluss vom jeweiligen Oberschwingungs-Erdschlussrichtungsrelais, beispielsweise OER, die Erdschlussstelle in Richtung Sammelschiene festgestellt wird. Diese Unterbrechung wirkt als Signal entsprechend «O» auf den Pegelumsetzer PU4 der jeweilig anderen Signalverarbeitungseinrichtung ESV, der damit eingangsseitig spannungslos wird, so dass an dessen Ausgang das bisherige Signal entsprechend «L» (da das Erdschlussrichtungsrelais OER einen Erdschluss in Richtung Leitung festgestellt hat) in entsprechend «O» wechselt, so dass das UND-Glied UG1 blockiert wird, das nachgeordnete Relais K1 nicht ansprechen kann und damit auch nicht der Ein-Zustand des Leistungsschalters LS (Fig. 1) geändert wird.

Beim Erdschluss treten Ausgleichsvorgänge mit Oberschwingungen auf; das Verzögerungsglied VG1 ist vorgesehen, um eine Ausschaltung des jeweiligen Leistungsschalters erst bei stationärem Erdschluss zu bewirken. Die Verzögerungszeit ist einstellbar und liegt beispielsweise zwischen etwa 1 und 10 s.

Der die beiden Signalverarbeitungseinrichtungen verbindende Hilfsadern-Schaltkreis HAV ist nicht zwingend notwendig. Es kann hierfür ein Sende-Empfangs-Kanal, beispielsweise unter Anwendung des Funkweges, verwendet werden. Die der Netzstation A zugeordnete Signalverarbeitungseinrichtung ESV sendet beispielsweise die an den Eingängen h, i, j des UND-Gliedes UG1 stehende Information $U_o$, E-Ltg, E-SS an die der Netzstation B zugeordnete Signalverarbeitungseinrichtung ESV'; hat diese Einrichtung festgestellt, dass der Erdschluss in Richtung Sammelschiene liegt, so sendet diese Signalverarbeitungseinrichtung ESV' keine Information an die der Netzstation A zugeordnete Signalverarbeitungseinrichtung ESV, so dass der dieser zugeordnete Leistungsschalter LS seinen Schaltzustand unverändert beibehält.

## Patentansprüche

1. Selektive Erdschlussschutzschaltung für eine Hochspannungskabelstrecke (HKS), an deren Enden je ein Leistungsschalter (LS, LS') mit Auslöseeinrichtung (S, S') sowie den Nullstrom und die Nullspannung erfassende Wandler ($I_w$, $U_w$, $I_w'$ $U_w'$) vorgesehen sind, dadurch gekennzeichnet, dass jedem Leistungsschalter (LS, LS') eine Signalverarbeitungseinrichtung (ESV, ESV') in Form einer logischen Verknüpfungsschaltung zugeordnet ist, von der zwei Eingänge an die Ausgänge eines aus den Wandlern ($I_w$, $U_w$, $I_w'$, $U_w'$) gespeisten Erdschlussrichtungsrelais (OER,

OER') angeschlossen sind, und ein dritter Eingang über eine die Messgrösse des Spannungswandlers erfassende Einrichtung (UST, UST') mit dem die Nullspannung erfassenden Wandler ($U_w$, $U_w'$) verbunden ist, und zwei Anschlüsse für einen beiden Signalverarbeitungseinrichtung (ESV, ESV') gemeinsam zugeordneten Informationskanal (HAV) vorgesehen sind.

2. Schutzschaltung nach Anspruch 1, dadurch gekennzeichnet, dass die die Messgrösse des Spannungswandlers ($U_w$, $U_w'$) erfassende Einrichtung (UST, UST') ein Schwellenwertschalter, insbesondere ein Schmitt-Trigger, ist.

3. Schutzschaltung nach Anspruch 1, dadurch gekennzeichnet, dass das Erdschlussrichtungsrelais (OER, OER') ein auf die bei Erdschluss in den Leitungen auftretenden Oberwellen ansprechendes Relais ist.

4. Schutzschaltung nach Anspruch 1, dadurch gekennzeichnet, dass die als logische Verknüpfungsschaltung ausgebildete Signalverarbeitungseinrichtung (ESV, ESV') zwei UND-Glieder (UG1, UG2) enthält, denen je ein Relais (K1, K2) zugeordnet ist, von denen eines (K1) zur Überwachung des Ausgangssignals und eines (K2) zur Überwachung des Informationskanals (HAV) vorgesehen ist.

5. Schutzschaltung nach Anspruch 4, dadurch gekennzeichnet, dass der Informationskanal (HAV) ein die beiden Signalverarbeitungseinrichtungen (ESV, ESV') verbindender Hilfsadernschaltkreis ist, der in jeder Signalverarbeitungseinrichtung (ESV, ESV') über einen Kontakt (d) des den Informationskanal (HAV) überwachenden Relais (K2) geführt ist.

## Revendications

1. Circuit de protection sélective contre les mises à la terre pour une section de câble à haute tension (HKS), à chacune des extrémités de laquelle sont prévus un interrupteur de puissance (LS, LS') avec dispositif de déclenchement (S, S'), ainsi que des convertisseurs ($I_w$, $U_w$, $I_w'$, $U_w'$) déterminant le courant zéro et la tension zéro, caractérisé en ce qu'à chaque interrupteur de puissance (LS, LS') est associé un dispositif de traitement de signaux (ESV, ESV') sous la forme d'un circuit de combinaison logique, dont deux entrées sont connectées aux sorties d'un relais de sens de mise à la terre (OER, OER') alimenté à partir des convertisseurs ($I_w$, $U_w$, $I_w'$, $U_w'$), et une troisième entrée est reliée par l'intermédiaire d'un dispositif (UST, UST') déterminant la grandeur de mesure du convertisseur de tension, au convertisseur ($U_w$, $U_w'$) déterminant la tension zéro, et deux connexions sont prévues pour un canal d'information (HAV) associé en commun aux deux dispositifs de traitement de signaux (ESV, ESV').

2. Circuit de protection suivant la revendication 1, caractérisé en ce que le dispositif (UST, UST') déterminant la grandeur de mesure du convertisseur de tension ($U_w$, $U_w'$) est un commutateur à valeur de seuil, en particulier une bascule de Schmitt.

3. Circuit de protection suivant la revendication 1, caractérisé en ce que le relais de sens de mise à la terre (OER, OER') est un relais réagissant aux harmoniques apparaissant dans les lignes en cas de mise à la terre.

4. Circuit de protection suivant la revendication 1, caractérisé en ce que le dispositif de traitement de signaux (ESV, ESV') réalisé en tant que circuit de combinaison logique, comporte deux circuit ET (UG1, UG2), à chacun desquels est associé un relais (K1, K2), dont un (K1) est prévu pour la surveillance du signal de sortie et un (K2) pour la surveillance du canal d'information (HAV).

5. Circuit de protection suivant la revendication 4, caractérisé en ce que le canal d'information (HAV) est un circuit de commande de fils auxiliaires reliant les deux dispositifs de traitement de signaux (ESV, ESV'), qui passe dans chaque dispositif de traitement de signaux (ESV, ESV'), par un contact (d) du relais (K2) surveillant le canal d'information (HAV).

## Claims

1. A selective earth protection circuit arrangement for a high-voltage cable section (HKS) having at each end a power circuit breaker (LS, LS') with tripping means (S, S') and current transformers ($I_w$, $U_w$, $I_w'$, $U_w'$) detecting the neutral current and the neutral voltage, characterised in that each power circuit breaker (LS, LS') has associated with it a signal-processing facility (ESV, ESV') in the form of a logic gating circuit arrangement having two inputs connected to the outputs of an earth fault direction relay (OER, OER') energized from the current transformers ($I_w$, $U_w$, $I_w'$, $U_w'$), while a third input of the logic gating circuit arrangement is connected, by way of means (UST, UST') for detecting the measured value of the voltage transformer, to the current transformer (UW, UW') detecting the neutral voltage, and two connections are provided for an information channel (HAV) common to the two signal-processing facilities (ESV, ESV').

2. A circuit arrangement according to claim 1, characterised in that the means (UST, UST') for detecting the measured value of the voltage transformer (UW, UW') are a threshold switch, more particularly a Schmitt trigger.

3. A circuit arrangement according to claim 1, characterised in that the earth fault direction relay (OER, OER') is a relay responding to the harmonics produced in the lines in response to an earth fault.

4. A circuit arrangement according to claim 1, characterised in that the signal-processing facility (ESV, ESV') embodied as a logic gating circuit arrangement has two AND-gates (UG1, UG2) each having associated with it a relay (K1, K2), one relay (K1) being operative to monitor the output signal and one relay (K2) being operative to monitor the information channel (HAV).

5. A circuit arrangement according to claim 4, characterised in that the information channel (HAV) is an auxiliary core switching circuit which interconnects the two signal-processing facilities (ESV, ESV') and which extends in each such facility by way of a contact (d) of the relay (K2) monitoring the information channel (HAV).

FIG.1

FIG.2